# EUROPEAN PATENT SPECIFICATION

(11) **EP 0 399 543 B1**
(45) Date of publication and mention of the grant of the patent: **03.05.1995**
(21) Application number: 90109934.1
(22) Date of filing: 25.05.1990
(51) Int. Cl.: C09J 127/12, C09K 3/10, C08L 53/00, C08L 27/12

(54) **Fluorine-containing elastomer composition**
Fluorhaltige Elastomermischung
Composition d'élastomères contenant du fluor

(30) Priority: 26.05.1989 JP 134366/89
(43) Date of publication of application: 28.11.1990
(73) Proprietor: DAIKIN INDUSTRIES, LIMITED, Osaka-shi, Osaka-fu 530 (JP)
(72) Inventor: Tatemoto, Masayoshi, Takatsuki-shi, Osaka-fu (JP)
(74) Representative: Hansen, Bernd, Dr. Dipl.-Chem.

(56) References cited:
- EP-A- 0 132 834
- GB-A- 2 084 590

## Description

The present invention relates to a fluorine-containing elastomer composition, in particular to the use of a composition comprising a fluorine-containing thermoplastic elastomer and a fluorine-containing liquid elastomer as a pressure sensitive adhesive, a sealing material or a hot melt adhesive.

A general pressure-sensitive adhesive contains an adhesive resin. However, the adhesive resin loses its pressure-sensitive adhesion property after long time, for example, 5 to 10 years. This may be due to autoxidation or change of chemical properties caused by compounded curing agents.

The conventional pressure-sensitive adhesive cannot be adhered to a fluorine-containing substrate such as a fluororesin or a fluoroelastomer.

One object of the present invention is to provide a pressure-sensitive adhesive composition which does not suffer from aging.

Another object of the present invention is to provide a pressure-sensitive adhesive composition which can be adhered to a fluorine-containing substrate.

A further object of the present invention is to provide a sealing material which can be easily applied.

A yet another object of the present invention is to provide a hot melt adhesive comprising fluorine-containing elastomers.

Accordingly, the present invention provides the use of a composition comprising a fluorine-containing thermoplastic elastomer, which is at least one selected from the group consisting of a fluorine-containing elastomer comprising at least one soft segment consisting of a terpolymer of vinylidene fluoride/hexafluoropropylene/tetrafluoroethylene or vinylidene fluoride/chlorotrifluoroethylene/tetrafluoroethylene and at least one hard segment consisting of a copolymer of tetrafluoroethylene/ethylene or chlorotrifluoroethylene/ethylene or polyvinylidene fluoride, a fluorine-containing elastomer comprising at least one soft segment consisting of a copolymer of tetrafluoroethylene/propylene and at least one hard segment consisting of a copolymer of tetrafluoroethylene/ethylene and a fluorine-containing elastomer comprising at least one soft segment consisting of an amorphous rubbery copolymer of tetrafluoroethylene/perfluoroalkyl vinyl ether and at least one hard segment consisting of a copolymer of tetrafluoroethylene/perfluoroalkyl vinyl ether in which the content of perfluoroalkyl vinyl ether is smaller than in the soft segment, and a fluorine-containing liquid elastomer wherein the weight ratio of said fluorine-containing liquid elastomer to said fluorine-containing thermoplastic elastomer is from 60:40 to 99:1, as a pressure-sensitive adhesive, a sealing material or a hot melt adhesive.

The pressure-sensitive adhesive composition is required to have such viscoelastic properties that it fits a surface of a substrate material to which the adhesive composition is adhered with a slight pressure and adheres to the substrate through the van der Waals force and that it is permanently deformed to such extent that it does not restore the original shape by stress generated by deformation from its original shape while the components do not migrate to the substrate material. The composition of the present invention satisfies the above requirements.

### BRIEF DESCRIPTION OF THE DRAWINGS

Fig. 1 is a ternary diagram showing a monomeric composition in a preferred combination of a fluorine-containing liquid elastomer comprising vinylidene fluoride, hexafluoropropylene and tetrafluoroethylene and a fluorine-containing thermoplastic elastomer which comprises a soft segment consisting of the same terpolymer, and
Fig. 2 is a graph showing relationships between stress and elongation ratios of the adhesive compositions prepared Example 1.

The fluorine-containing thermoplastic elastomer to be used in the present invention may be prepared by a method described in Japanese Patent Publication No. 4728/1983 and U.S. Patent No. 4,158,678 the disclosure of which is hereby incorporated by reference. Specific examples of the fluorine-containing thermoplastic elastomer are an elastomer comprising at least one soft segment consisting of a terpolymer of vinylidene fluoride/hexafluoropropylene/tetrafluoroethylene or vinylidene fluoride/chlorotrifluoroethylene/tetrafluoroethylene and at least one hard segment consisting of a copolymer of tetrafluoroethylene/ethylene or chlorotrifluoroethylene/ethylene or polyvinylidene fluoride, an elastomer comprising at least one soft segment consisting of a copolymer of tetrafluoroethylene/propylene and at least one hard segment consisting of a copolymer of tetrafluoroethylene/ethylene, and an elastomer comprising at least one soft segment consisting of an amorphous rubbery copolymer of tetrafluoroethylene/perfluoroalkyl vinyl ether and at least one hard segment consisting of a copolymer of tetrafluoroethylene/perfluoroalkyl vinyl ether in which the content of perfluoroalkyl vinyl ether is smaller than in the soft segment. These fluorine-containing thermoplastic elastomers are described in Japanese Patent Publication No. 49327/1986 and U.S. Patent No. 4,158,678

Such fluorine-containing thermoplastic elastomer can be processed in the form of a film in a pure state and adheres to a smooth surface of glass or a metal through the van der Waals force. However, it cannot be adhered to an uneven surface such as a paper surface. Addition of the fluorine-containing liquid polymer to the fluorine-containing thermoplastic elastomer gives a composition which can be adhered to the uneven surface or a substrate having a large curvature.

The performances of the composition, particularly the pressure-sensitive adhesive composition of the present invention can be controlled by selecting properties of the fluorine-containing thermoplastic elastomer such as the ratio and/or molecular weights of the soft segment and the hard segment, and the kind and the molecular weight of the fluorine-containing liquid elastomer.

In the composition of the present invention, the weight ratio of the fluorine-containing liquid elastomer to the fluorine-containing thermoplastic elastomer is from 60:40 to 99:1, preferably from 72:28 to 99:1, more preferably from 72:28 to 95:5.

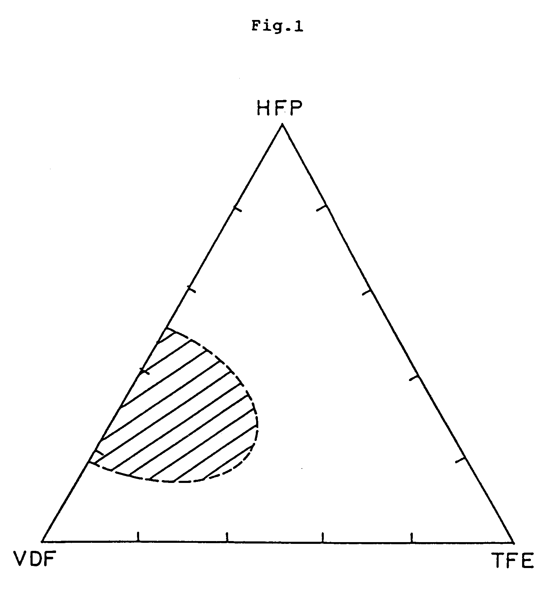

In a preferred embodiment of the present invention, the fluorine-containing thermoplastic elastomer and the fluorine-containing liquid elastomer are combined so that the former is freely swelled or dissolved in the latter. To this end, the soft segment of the fluorine-containing thermoplastic elastomer is preferably compatible with the fluorine-containing liquid elastomer. That is, the monomeric composition of the soft segment of the thermoplastic elastomer is selected so closely to the monomeric composition of the liquid elastomer that phase separation between two elastomers do not occur at any ratio of two elastomers. Otherwise, the liquid elastomer tends to bleed out after long time and migrates to the substrate. A preferred combination of the elastomers is a combination of a fluorine-containing liquid elastomer comprising vinylidene fluoride, hexafluoropropylene and tetrafluoroethylene in a composition which falls in the hatched area of the ternary diagram of Fig. 1 and a fluorine-containing thermoplastic elastomer which comprises a soft segment consisting of the same terpolymer as the liquid elastomer. Another preferred combination of the elastomers is a combination of a fluorine-containing liquid elastomer which is a tetrafluoroethylene/propylene copolymer or a tetrafluoroethylene/perfluoropropyl vinyl ether copolymer and a fluorine-containing thermoplastic elastomer comprising a soft segment consisting of the same copolymer as the liquid elastomer.

Examples of the hard segment of the fluorine-containing thermoplastic elastomer are a crystalline copolymer segment comprising tetrafluoroethylene and ethylene, a polyvinylidene fluoride segment, a crystalline copolymer segment comprising tetrafluoroethylene and perfluoropropyl vinyl ether.

The composition of the present invention may be prepared by mixing the fluorine-containing thermoplastic elastomer and the fluorine-containing liquid elastomer with a rubber mill, a calender roll or a kneader at a temperature from room temperature to about 200°C to obtain a homogeneous compound. If necessary, a solvent which is compatible with the composition may be used. The elastomer composition may be used in a solution form to make processing easy, although it can be processed without the solvent at high temperature. Alternatively, the adhesive composition of the present invention can be prepared by mixing aqueous dispersions of the elastomers and removing water.

The fluorine-containing liquid elastomer to be used in the present invention may be prepared by a method for decreasing the molecular weight of the elastomer which is disclosed in Japanese Patent Publication No. 12924/1986 and U.S. Patent No. 4,361,678 the disclosure of which is hereby incorporated by reference. Preferably, the fluorine-containing elastomer has stabilized molecular ends and hardly proceeds any chemical reaction to prevent aging of the adhesiveness.

Preferred examples of the fluorine-containing liquid elastomer are vinylidene fluoride/hexafluoropropylene base elastomers, vinylidene fluoride/hexafluoropropylene/tetrafluoroethylene base elastomers, tetrafluoroethylene/propylene base elastomers, hexafluoropropylene/ethylene base elastomers, fluorosilicone elastomers and fluorine-substituted phosphazene elastomers. The liquid elastomer has a number average molecular weight of 500 to 20,000, preferably 500 to 10,000. They may be used independently or as a mixture. To improve the adhesive force or properties of the adhesive composition, a functional group such as -OH or -COOH can be introduced in the polymer chains or at the polymer chain ends. Such group may be introduced in the polymer chains by randomly copolymerizing a compound of the formula: CF₂=CFCH₂CH₂OH or CF₂=CFCF₂COOH.

To improve the adhesive properties at high temperature of the composition, the fluorine-containing thermoplastic elastomer may be crosslinked.

In one preferred embodiment of the present invention, the fluorine-containing thermoplastic elastomer has, at polymer chain ends, iodine atoms which have good radical reactivity. Such iodine-containing elastomer is disclosed in U.S. Patent No. 4,243,770 the disclosure of which is hereby incorporated by reference and can be crosslinked with a peroxide in the presence of a crosslinking aid such as a polyfunctional unsaturated compound (e.g. triallylisocyanurate). Through such crosslinking manner, the thermoplastic elastomer alone can be crosslinked without deteriorating the properties of the liquid elastomer and the adhesive properties of the composition are improved. For example, migration of the components to the substrate is effectively prevented.

The composition of the present invention may contain a filler such as powder of SiO₂, BaSO₄ or MgO in an amount of several ten parts by weight per 100 parts of the elastomers.

When the composition is applied on at least one surface of a base material such as a tape, a film, a sheet or a block, an adhesive material is prepared. The kind of base material is not critical. A fluororesin can be used as the base material.

In the following Examples "parts" are by weight unless otherwise indicated.

### Example 1

An A-B-A block copolymer comprising a hard terpolymer segment (A) consisting of tetrafluoroethylene/ethylene/hexafluoropropylene in a molar ratio of 49/43/8 and a soft terpolymer segment (B) consisting of vinylidene fluoride/hexafluoropropylene/tetrafluoroethylene in a molar ratio of 50/30/20 (a molecular weight of the segment (B): 1.5 x 10⁵, a weight ratio of the segments A to the segment B: 0.15, a melting point: 223°C) (20 g) was kneaded on a rubber mill (a diameter of 80 mm) at 90°C to form a sheet.

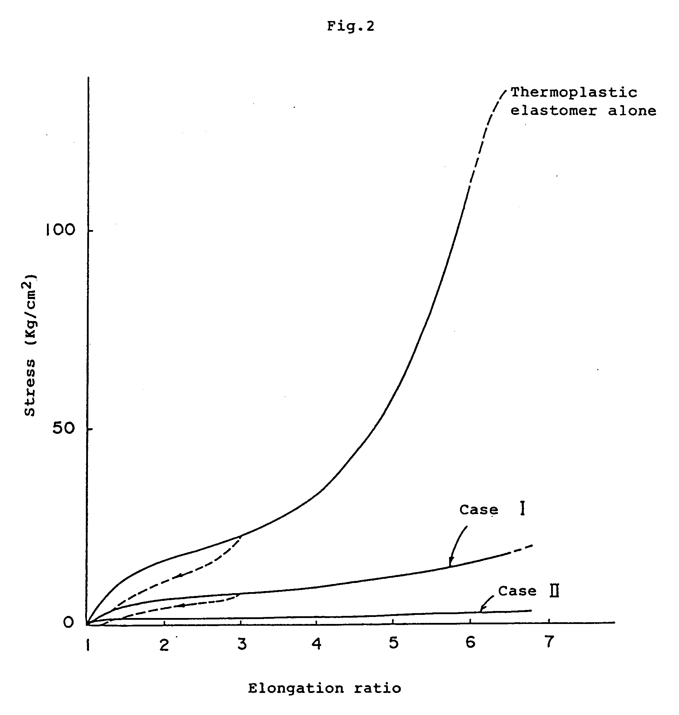

To the sheet form block copolymer, a liquid elastomer consisting of the same monomers as the soft segment B having a number average molecular weight of 3600 (13 g in Case I or 90 g in Case II) was gradually added to prepare a homogeneous composition. The composition in Case I was like a very soft crosslinked rubber, while the composition in Case II was a tough past. Relationship between elongation ratios and stress is shown in Fig. 2. In Case I, the composition was softened but not easily plastically deformed, while in Case II, the composition could be plastically deformed.

The composition of Case II was plastically deformed with small stress, but it did not freely flow unless it was heated to a temperature higher than its melting point. That is, it was self-supporting.

When rutile type TiO₂ (10 parts) and MT carbon (0.2 part) were added to the composition of Case II (100 parts), a grey compound was obtained. The gray compound could be easily injected with a hot melt applicator at 160°C under air pressure of 0.2 bar (0.2 kg/cm²G) and applied to a part where sealing or application of a hot melt is required. The composition had good adhesivity and did not flow at room temperature. This means that the composition can be used as a sealing material or a hot melt material.

A suitable amount of the composition of Case II was sandwiched between an aluminum foil and a tetrafluoroethylene/hexafluoropropylene copolymer film and pressed under 100 bar (100 kg/cm²G) at 200°C. Thereby, a laminate consisting of the aluminum foil and the copolymer film adhered by the composition was easily produced. When the film and the copolymer film were peeled off, the entire composition remained on the copolymer film. The copolymer film carrying the adhesive composition can be used as an adhesive film. Peeling strength of the adhesive film from an aluminum plate was 2.2 kg/cm.

As a protection film for the adhesive tape, a releasing paper coated with a silicone base backcoating was effective.

### Example 2

In the same manner as in Example 1 but using, as a thermoplastic elastomer, an A-B-A block copolymer comprising a soft copolymer segment (A) consisting of vinylidene fluoride/hexafluoropropylene in a molar ratio of 78/22 and having a number average molecular weight of 14.5 x 10⁴ and a hard terpolymer segment (B) consisting of tetrafluoroethylene/ethylene/hexafluoropropylene in a molar ratio of 49/43/8 having a number average molecular weight of 1.1 x 10⁴ and, as a liquid elastomer, a copolymer of vinylidene fluoride/hexafluoropropylene in a molar ratio of 78/22 having a number average molecular weight of 3500 most of chain ends of which were blocked with hydrogen atoms and -CH(CH₃)OCOCH₃ groups, an adhesive composition comprising 80 % by weight of the liquid elastomer and the rest of the thermoplastic elastomer was prepared.

The composition had a glass transition temperature of -35°C, which means that the composition of Example 2 had better low temperature properties than that of Example 1.

### Example 3

### a) Preparation of thermoplastic perfluoroelastomer

(1) In a 3 liter autoclave, pure water (1.5 liters) and ammonium perfluorooctanoate (30 g) were charged and internal atmosphere was thoroughly replaced with nitrogen gas. Thereafter, perfluoro(propyl vinyl ether) (hereinafter referred to as "PPVE") (300 g) was injected. The temperature was raised to 50°C while stirring, and tetrafluoroethylene (hereinafter referred to as "TFE") was injected to 3.5 bar (3.5 kg/cm²G). When a 1 % aqueous solution of ammonium persulfate (20 ml) was injected, the internal pressure started to decrease. When the internal pressure dropped to 3 bar (3 kg/cm²G), 1,4-diiodoperfluorobutane (1.6 g) was injected. Once the reaction rate slightly decreased. While continuously supplying TFE, the reaction was continued under pressure of 3.0 to 3.5 bar (3.0 to 3.5 kg/cm²G), whereby the reaction rate gradually increased. After 14 hours, the internal pressure was released and the reaction mixture was cooled to room temperature to terminate polymerization. The product was a white aqueous dispersion, and a small amount of PPVE remained in a liquid state. The solid content in the dispersion was 20.7 % by weight.
   After evaporating the volatile materials at 60°C under pressure of 0.027 MPa (200 mmHg), a part of the residue was added to a large amount of acetone and mixed in a mixer to break the dispersion. Then, the product was washed with water and dried to obtain a rubbery crum.
   The PPVE content in the rubber measured by high temperature NMR analysis was 38 % by mole, the molecular weight measured by GPC (solvent: trichlorotrifluoroethane) was 1.1 x 10⁵, and the glass transition temperature measured with a differential scanning calorimeter (DSC) was 2°C. The iodine content was 0.22 %.
(2) The dispersion obtained in the step (1) (350 ml) and pure water (1150 ml) were charged in the same autoclave as used in the step (1). After replacing the internal atmosphere with TFE, PPVE (60 g) was injected and then TFE was injected to 8 bar (8 kg/cm²G) at 80°C while stirring. As the internal pressure started to decrease, TFE was injected to increase the pressure and the reaction was continued under the same pressure. After 2 hours, a 0.1 % aqueous solution of ammonium persulfate (10 ml) was injected and the reaction was further continued for 7 hours. Thereafter, the internal pressure was released and the reaction mixture was cooled to obtain an aqueous dispersion of a polymer. The dispersion was vigorously mixed in a mixer to coagulate the polymer in a powder form, followed by washing with water and drying to obtain the polymer (230 g). The polymer had a melting point of 260°C by the DSC analysis.

### b) Preparation of liquid elastomer

In a 500 ml autoclave, 1,4-diiodoperfluorobutane (49 g) and diisopropyl peroxydicarbonate (hereinafter referred to as "IPP") (1 g) were charged. After thoroughly replacing the internal atmosphere with nitrogen gas, PPVE (300g) was injected and then TFE was injected to 8 bar (8 kg/cm²G) at 45°C while stirring. As the pressure decreases, TFE was injected to keep the pressure constant and the reaction was continued. After 2 hours from the start of polymerization, the reaction temperature was raised to 50°C. After 11 hours from the start of polymerization, the temperature was decreased and the internal pressure was released. The liquid reaction mixture was recovered. From the reaction mixture, volatile materials were removed with a rotary evaporator under reduced pressure to obtain a viscous liquid polymer (223 g). According to ¹⁹F-NMR analysis, the PPVE content in the polymer was 34 % by mole and the iodine content was 12 %. According to the GPC analysis (solvent: trichlorotrifluoroethane), the polymer had a number average molecular weight (Mn) of 2100, a weight average molecular weight (Mw) of 2900 and an Mw/Mn ratio of 1.38.

In a 20 % solution of the polymer in Cl(CF₂CFCl)₂-Cl, a gaseous mixture of F₂ and N₂ in a molar ratio of 20/80 was bubbled till IF₅ was not detected in the exit gas, whereby the terminal iodine atoms were removed through fluorination.

The thermoplastic elastomer prepared in the step a) (15 parts) and the liquid elastomer prepared in the step b) (85 parts) were kneaded with a kneader (Plastgraph manufactured by Haake Inc.) at 250°C, 100 rpm for 30 minutes.

The compound was coated on a film of a tetrafluoroethylene/perfluoro(propyl vinyl ether) copolymer (PFA) to prepare an adhesive tape and adhered to an iron plate. Then, the iron plate was plated in a hard chrome plating bath at 100°C. The part carrying the adhesive tape was not plated. This means that the adhesive tape had good plating bath repellency.

The adhesive composition also had water- and oil-repellency, and was not deteriorated with hydrocarbon type solvent except trichlorotrifluoroethane. In addition, the adhesive composition of Example 3 had good resistance to amines which deteriorated the compositions of Examples 1 and 2.

## Claims

1. Use of a composition comprising a fluorine-containing thermoplastic elastomer, which is at least one selected from the group consisting of a fluorine-containing elastomer comprising at least one soft segment consisting of a terpolymer of vinylidene fluoride/hexafluoropropylene/tetrafluoroethylene or vinylidene fluoride/chlorotrifluoroethylene/tetrafluoroethylene and at least one hard segment consisting of a copolymer of tetrafluoroethylene/ethylene or chlorotrifluoroethylene/ethylene or polyvinylidene fluoride, a fluorine-containing elastomer comprising at least one soft segment consisting of a copolymer of tetrafluoroethylene/propylene and at least one hard segment consisting of a copolymer of tetrafluoroethylene/ethylene and a fluorine-containing elastomer comprising at least one soft segment consisting of an amorphous rubbery copolymer of tetrafluoroethylene/perfluoroalkyl vinyl ether and at least one hard segment consisting of a copolymer of tetrafluoroethylene/perfluoroalkyl vinyl ether in which the content of perfluoroalkyl vinyl ether is smaller than in the soft segment, and a fluorine-containing liquid elastomer, wherein the weight ratio of said fluorine-containing liquid elastomer to said fluorine-containing thermoplastic elastomer is from 60:40 to 99:1, as a pressure sensitive adhesive.

2. Use of a composition according to claim 1, wherein the weight ratio of said fluorine-containing liquid elastomer to said fluorine-containing thermoplastic elastomer is from 72:28 to 99:1.

3. Use of a composition according to claim 1, wherein the weight ratio of said fluorine-containing liquid elastomer to said fluorine-containing thermoplastic elastomer is from 72:28 to 95:5.

4. The use according to claim 1, wherein said fluorine-containing liquid elastomer is at least one selected from the group consisting of a vinylidene fluoride/hexafluoropropylene base elastomer, a vinylidene fluoride/hexafluoropropylene/tetrafluoroethylene base elastomer, a tetrafluoroethylene/propylene base elastomer, a hexafluoropropylene/ethylene base elastomer, a fluorosilicone elastomer and a fluorine-substituted phosphazene elastomer.

5. The use according to claim 1, wherein said fluorine-containing liquid elastomer has a number average molecular weight of 500 to 20,000.

6. The use according to claim 5, wherein the number average molecular weight of said liquid elastomer is from 500 to 10,000.

7. Use of a composition as a sealing material comprising a fluorine-containing thermoplastic elastomer, which is at least one selected from the group consisting of a fluorine-containing elastomer comprising at least one soft segment consisting of a terpolymer of vinylidene fluoride/hexafluoropropylene/tetrafluoroethylene or vinylidene fluoride/chlorotrifluoroethylene/tetrafluoroethylene and at least one hard segment consisting of a copolymer of tetrafluoroethylene/ethylene or chlorotrifluoroethylene/ethylene or polyvinylidene fluoride, a fluorine-containing elastomer comprising at least one soft segment consisting of a copolymer of tetrafluoroethylene/propylene and at least one hard segment consisting of a copolymer of tetrafluoroethylene/ethylene and a fluorine-containing elastomer comprising at least one soft segment consisting of an amorphous rubbery copolymer of tetrafluoroethylene/perfluoroalkyl vinyl ether and at least one hard segment consisting of a copolymer of tetrafluoroethylene/perfluoroalkyl vinyl ether in which the content of perfluoroalkyl vinyl ether is smaller than in the soft segment, and a fluorine-containing liquid elastomer, wherein the weight ratio of said fluorine-containing liquid elastomer to said fluorine-containing thermoplastic elastomer is from 60:40 to 99:1.

8. The use according to claim 7, wherein the weight ratio of said fluorine-containing liquid elastomer to said fluorine-containing thermoplastic elastomer is from 72:28 to 99:1.

9. Use according to claim 7, wherein the weight ratio of said fluorine-containing liquid elastomer to said fluorine-containing thermoplastic elastomer is from 72:28 to 95:5.

10. The use according to claim 7, wherein said fluorine-containing liquid elastomer is at least one selected from the group consisting of a vinylidene fluoride/hexafluoropropylene base elastomer, a vinylidene fluoride/hexafluoropropylene/tetrafluoroethylene base elastomer, a tetrafluoroethylene/propylene base elastomer, a hexafluoropropylene/ethylene base elastomer, a fluorosilicone elastomer and a fluorine-substituted phosphazene elastomer.

11. The use according to claim 7, wherein said fluorine-containing liquid elastomer has a number average molecular weight of 500 to 20,000.

12. The use according to claim 11, wherein the number average molecular weight of said liquid elastomer is from 500 to 10,000.

13. Use of a composition as a hot melt adhesive comprising a fluorine-containing thermoplastic elastomer, which is at least one selected from the group consisting of a fluorine-containing elastomer comprising at least one soft segment consisting of a terpolymer of vinylidene fluoride/hexafluoropropylene/tetrafluoroethylene or vinylidene fluoride/chlorotrifluoroethylene/tetrafluoroethylene and at least one hard segment consisting of a copolymer of tetrafluoroethylene/ethylene or chlorotrifluoroethylene/ethylene or polyvinylidene fluoride, a fluorine-containing elastomer comprising at least one soft segment consisting of a copolymer of tetrafluoroethylene/propylene and at least one hard segment consisting of a copolymer of tetrafluoroethylene/ethylene and a fluorine-containing elastomer comprising at least one soft segment consisting of an amorphous rubbery copolymer of tetrafluoroethylene/perfluoroalkyl vinyl ether and at least one hard segment consisting of a copolymer of tetrafluoroethylene/perfluoroalkyl vinyl ether in which the content of perfluoroalkyl vinyl ether is smaller than in the soft segment, and a fluorine-containing liquid elastomer, wherein the weight ratio of said fluorine-containing liquid elastomer to said fluorine-containing thermoplastic elastomer is from 60:40 to 99:1.

14. The use according to claim 13, wherein the weight ratio of said fluorine-containing liquid elastomer to said fluorine-containing thermoplastic elastomer is from 72:28 to 99:1.

15. The use according to claim 13, wherein the weight ratio of said fluorine-containing liquid elastomer to said fluorine-containing thermoplastic elastomer is from 72:28 to 95:5.

16. The use according to claim 13, wherein said fluorine-containing liquid elastomer is at least one selected from the group consisting of a vinylidene fluoride/hexafluoropropylene base elastomer, a vinylidene fluoride/hexafluoropropylene/tetrafluoroethylene base elastomer, a tetrafluoroethylene/propylene base elastomer, a hexafluoropropylene/ethylene base elastomer, a fluorosilicone elastomer and a fluorine-substituted phosphazene elastomer.

17. The use according to claim 13, wherein said fluorine-containing liquid elastomer has a number average molecular weight of 500 to 20,000.

18. The use according to claim 17, wherein the number average molecular weight of said liquid elastomer is from 500 to 10,000.

## Patentansprüche

1. Verwendung einer Zusammensetzung, die ein fluorhaltiges thermoplastisches Elastomer, welches mindestens eines ist, das ausgewählt wird aus der Gruppe bestehend aus einem fluorhaltigen Elastomer mit mindestens einem weichen Segment aus einem Terpolymer von Vinylidenfluorid/Hexafluorpropylen/Tetrafluorethylen oder Vinylidenfluorid/Chlortrifluorethylen/Tetrafluorethylen und mindestens einem harten Segment aus einem Copolymer von Tetrafluorethylen/Ethylen oder Chlortrifluorethylen/Ethylen oder Polyvinylidenfluorid, einem fluorhaltigen Elastomer mit mindestens einem weichen Segment aus einem Copolymer von Tetrafluorethylen/Propylen und mindestens einem harten Segment aus einem Copolymer von Tetrafluorethylen/Ethylen und einem fluorhaltigen Elastomer mit mindestens einem weichen Segment aus einem amorphen kautschukartigen Copolymer aus Tetrafluorethylen/Perfluoralkylvinylether und mindestens einem harten Segment aus einem Copolymer von Tetrafluorethylen/Perfluoralkylvinylether, bei dem der Gehalt an Perfluoralkylvinylether geringer ist als im weichen Segment, und ein fluorhaltiges flüssiges Elastomer umfaßt, wobei das Gewichtsverhältnis des fluorhaltigen flüssigen Elastomers zum fluorhaltigen thermoplastischen Elastomer von 60:40 bis 99:1 beträgt, als druckempfindlicher Kleber.

2. Verwendung einer Zusammensetzung gemäß Anspruch 1, wobei das Gewichtsverhältnis des fluorhaltigen flüssigen Elastomeren zum fluorhaltigen thermoplastischen Elastomeren von 72:28 bis 99:1 beträgt.

3. Verwendung einer Zusammensetzung gemäß Anspruch 1, wobei das Gewichtsverhältnis des fluorhaltigen flüssigen Elastomeren zum fluorhaltigen thermoplastischen Elastomeren von 72:28 bis 95:5 beträgt.

4. Verwendung gemäß Anspruch 1, wobei das fluorhaltige flüssige Elastomer mindestens eines ist, das aus der Gruppe ausgewählt wird, welche besteht aus einem Elastomer auf Vinylidenfluorid/Hexafluorpropylen-Basis, einem Elastomer auf Vinylidenfluorid/Hexafluorpropylen/Tetrafluorethylen-Basis, einem Elastomer auf Tetrafluorethylen/Propylen-Basis, einem Elastomer auf Hexafluorpropylen/Ethylen-Basis, einem Fluorsilicon-Elastomer und einem Fluor-substituierten Phosphazen-Elastomer.

5. Verwendung gemäß Anspruch 1, wobei das fluorhaltige flüssige Elastomer ein Molekulargewichtszahlenmittel von 500 bis 20 000 hat.

6. Verwendung gemäß Anspruch 5, wobei das Molekulargewichtszahlenmittel des flüssigen Elastomeren 500 bis 10 000 beträgt.

7. Verwendung einer Zusammensetzung als Dichtungsmaterial, welche ein fluorhaltiges thermoplastisches Elastomer, das mindestens eines ist, das ausgewählt wird aus der Gruppe bestehend aus einem fluorhaltigen Elastomer mit mindestens einem weichen Segment aus einem Terpolymer aus Vinylidenfluorid/Hexafluorpropylen/Tetrafluorethylen oder Vinylidenfluorid/Chlortrifluorethylen/Tetrafluorethylen und mindestens einem harten Segment aus einem Copolymer aus Tetrafluorethylen/Ethylen oder Chlortrifluorethylen/Ethylen oder Polyvinylidenfluorid, einem fluorhaltigen Elastomer mit mindestens einem weichen Segment aus einem Copolymer von Tetrafluorethylen/Propylen und mindestens einem harten Segment aus einem Copolymer von Tetrafluorethylen/Ethylen und einem fluorhaltigen Elastomer mit mindestens einem weichen Segment aus einem amorphen kautschukartigen Copolymer von Tetrafluorethylen/Perfluoralkylvinylether und mindestens einem harten Segment aus einem Copolymer von Tetrafluorethylen/Perfluoralkylvinylether, wobei der Perfluoralkylvinylether-Gehalt geringer ist als im weichen Segment, und ein fluorhaltiges flüssiges Elastomer umfaßt, wobei das Gewichtsverhältnis des fluorhaltigen flüssigen Elastomeren zum fluorhaltigen thermoplastischen Elastomer von 60:40 bis 99:1 beträgt.

8. Verwendung gemäß Anspruch 7, wobei das Gewichtsverhältnis des fluorhaltigen flüssigen Elastomeren zum fluorhaltigen thermoplastischen Elastomeren von 72:28 bis 99:1 beträgt.

9. Verwendung gemäß Anspruch 7, wobei das Gewichtsverhältnis des fluorhaltigen flüssigen Elastomeren zum fluorhaltigen thermoplastischen Elastomeren von 72:28 bis 95:5 beträgt.

10. Verwendung gemäß Anspruch 7, wobei das fluorhaltige flüssige Elastomer mindestens eines ist, das aus der Gruppe ausgewählt wird, welche besteht aus einem Elastomer auf Vinylidenfluorid/Hexafluorpropylen-Basis, einem Elastomer auf Vinylidenfluorid/Hexafluorpropylen/Tetrafluorethylen-Basis, einem Elastomer auf Tetrafluorethylen/Propylen-Basis, einem Elastomer auf Hexafluorpropylen/Ethylen-Basis, einem Fluorsilicon-Elastomer und einem Fluorsubstituierten Phosphazen-Elastomer.

11. Verwendung gemäß Anspruch 7, wobei das fluorhaltige flüssige Elastomer ein Molekulargewichtszahlenmittel von 500 bis 20 000 hat.

12. Verwendung gemäß Anspruch 11, wobei das fluorhaltige flüssige Elastomer ein Molekulargewichtszahlenmittel von 500 bis 10 000 hat.

13. Verwendung einer Zusammensetzung als Schmelzkleber, welche ein fluorhaltiges thermoplastisches Elastomer, das mindestens eines ist, das ausgewählt wird aus der Gruppe bestehend aus einem fluorhaltigen Elastomer mit mindestens einem weichen Segment aus einem Terpolymer aus Vinylidenfluorid/Hexafluorpropylen/Tetrafluorethylen oder Vinylidenfluorid/Chlortrifluorethylen/Tetrafluorethylen und mindestens einem harten Segment aus einem Copolymer aus Tetrafluorethylen/Ethylen oder Chlortrifluorethylen/Ethylen oder Polyvinylidenfluorid, einem fluorhaltigen Elastomer mit mindestens einem weichen Segment aus einem Copolymer von Tetrafluorethylen/Propylen und mindestens einem harten Segment aus einem Copolymer von Tetrafluorethylen/Ethylen und einem fluorhaltigen Elastomer mit mindestens einem weichen Segment aus einem amorphen kautschukartigen Copolymer von Tetrafluorethylen/Perfluoralkylvinylether und mindestens einem harten Segment aus einem Copolymer von Tetrafluorethylen/Perfluoralkylvinylether, wobei der Perfluoralkylvinylether-Gehalt geringer ist als im weichen Segment, und ein fluorhaltiges flüssiges Elastomer umfaßt, wobei das Gewichtsverhältnis des fluorhaltigen flüssigen Elastomeren zum fluorhaltigen thermoplastischen Elastomer von 60:40 bis 99:1 beträgt.

14. Verwendung gemäß Anspruch 13, wobei das Gewichtsverhältnis des fluorhaltigen flüssigen Elastomeren zum fluorhaltigen thermoplastischen Elastomeren von 72:28 bis 99:1 beträgt.

15. Verwendung gemäß Anspruch 13, wobei das Gewichtsverhältnis des fluorhaltigen flüssigen Elastomeren zum fluorhaltigen thermoplastischen Elastomeren von 72:28 bis 95:5 beträgt.

16. Verwendung gemäß Anspruch 13, wobei das fluorhaltige flüssige Elastomer mindestens eines ist, das aus der Gruppe ausgewählt wird, welche besteht aus einem Elastomer auf Vinylidenfluorid/Hexafluorpropylen-Basis, einem Elastomer auf Vinylidenfluorid/Hexafluorpropylen/Tetrafluorethylen-Basis, einem Elastomer auf Tetrafluorethylen/Propylen-Basis, einem Elastomer auf Hexafluorpropylen/Ethylen-Basis, einem Fluorsilicon-Elastomer und einem Fluor-substituierten Phosphazen-Elastomer.

17. Verwendung gemäß Anspruch 13, wobei das fluorhaltige flüssige Elastomer ein Molekulargewichtszahlenmittel von 500 bis 20 000 hat.

18. Verwendung gemäß Anspruch 17, wobei das fluorhaltige flüssige Elastomer ein Molekulargewichtszahlenmittel von 500 bis 10 000 hat.

## Revendications

1. Utilisation d'une composition comprenant un élastomère thermoplastique contenant du fluor, qui est constitué par au moins un produit choisi dans le groupe constitué par un élastomère contenant du fluor, comprenant au moins un segment souple constitué par un terpolymère de fluorure de vinylidène/hexafluoropropylène/tétrafluoroéthylène ou de fluorure de vinylidène/chlorotrifluoréthylène/tétrafluoroéthylène et au moins un segment rigide constitué par un copolymère de tétrafluoroéthylène/éthylène ou de chlorotrifluoroéthylène/éthylène ou du fluorure de polyvinylidène, un élastomère contenant du fluor, comprenant au moins un segment souple constitué par un copolymère de tétrafluoroéthylène/propylène et au moins un segment rigide constitué par un copolymère de tétrafluoroéthylène/éthylène et un élastomère contenant du fluor, comprenant au moins un segment souple constitué par un copolymère caoutchouteux amorphe de tétrafluoroéthylène/éther de perfluoroalkyle et de vinyle et au moins un segment rigide comprenant un copolymère de tétrafluoroéthylène/éther de perfluoroalkyle et de vinyle dans lequel le taux d'éther de perfluoroalkyle et de vinyle est inférieur à celui contenu dans le segment souple, et un élastomère liquide contenant du fluor, dans laquelle le rapport pondéral dudit élastomère liquide contenant du fluor audit élastomère thermoplastique contenant du fluor est compris entre 60:40 et 99:1, en tant que produit autocollant.

2. Utilisation d'une composition selon la revendication 1, dans laquelle le rapport pondéral dudit élastomère liquide contenant du fluor audit élastomère thermoplastique contenant du fluor est compris entre 72:28 et 99:1.

3. Utilisation d'une composition selon la revendication 1, dans laquelle le rapport pondéral dudit élastomère liquide contenant du fluor audit élastomère thermoplastique contenant du fluor est compris entre 72:28 et 95:5.

4. Utilisation selon la revendication 1, dans laquelle ledit élastomère liquide contenant du fluor est constitué par au moins un produit choisi dans le groupe comprenant un élastomère à base de fluorure de vinylidène/hexafluoropropylène, un élastomère à base de fluorure de vinylidène/hexafluoropropylène/tétrafluoroéthylène, un élastomère à base de tétrafluoroéthylène/propylène, un élastomère à base d'hexafluoropropylène/éthylène, un élastomère de fluorosilicone et un élastomère de phosphazène substitué par du fluor.

5. Utilisation selon la revendication 1, dans laquelle ledit élastomère liquide contenant du fluor a une masse moléculaire moyenne en nombre de 500 à 20 000.

6. Utilisation selon la revendication 5, dans laquelle ledit élastomère liquide contenant du fluor a une masse moléculaire moyenne en nombre de 500 à 10 000.

7. Utilisation d'une composition, en tant que matériau d'étanchéité, comprenant un élastomère thermoplastique contenant du fluor, qui est constitué par au moins un produit choisi dans le groupe constitué par un élastomère contenant du fluor, comprenant au moins un segment souple constitué par un terpolymère de fluorure de vinylidène/hexafluoropropylène/tétrafluoroéthylène ou de fluorure de vinylidène/chlorotrifluoréthylène/tétrafluoroéthylène et au moins un segment rigide constitué par un copolymère de tétrafluoroéthylène/éthylène ou de chlorotrifluoroéthylène/éthylène ou du fluorure de polyvinylidène, un élastomère contenant du fluor, comprenant au moins un segment souple constitué par un copolymère de tétrafluoroéthylène/propylène et au moins un segment rigide constitué par un copolymère de tétrafluoroéthylène/éthylène et un élastomère contenant du fluor, comprenant au moins un segment souple constitué par un copolymère caoutchouteux amorphe de tétrafluoroéthylène/éther de perfluoroalkyle et de vinyle et au moins un segment rigide comprenant un copolymère de tétrafluoroéthylène/éther de perfluoroalkyle et de vinyle dans lequel le taux d'éther de perfluoroalkyle et de vinyle est inférieur à celui contenu dans le segment souple, et un élastomère liquide contenant du fluor, dans laquelle le rapport pondéral dudit élastomère liquide contenant du fluor audit élastomère thermoplastique contenant du fluor est compris entre 60:40 et 99:1.

8. Utilisation d'une composition selon la revendication 7, dans laquelle le rapport pondéral dudit élastomère liquide contenant du fluor audit élastomère thermoplastique contenant du fluor est compris entre 72:28 et 99:1.

9. Utilisation d'une composition selon la revendication 7, dans laquelle le rapport pondéral dudit élastomère liquide contenant du fluor audit élastomère thermoplastique contenant du fluor est compris entre 72:28 et 95:5.

10. Utilisation selon la revendication 7, dans laquelle ledit élastomère liquide contenant du fluor est constitué par au moins un produit choisi dans le groupe comprenant un élastomère à base de fluorure de vinylidène/hexafluoropropylène, un élastomère à base de fluorure de vinylidène/hexafluoropropylène/tétrafluoroéthylène un élastomère à base de tétrafluoroéthylène/propylène, un élastomère à base d'hexafluoropropylène/éthylène, un élastomère de fluorosilicone et un élastomère de phosphazène substitué par du fluor.

11. Utilisation selon la revendication 7, dans laquelle ledit élastomère liquide contenant du fluor a une masse moléculaire moyenne en nombre de 500 à 20 000.

12. Utilisation selon la revendication 11, dans laquelle ledit élastomère liquide contenant du fluor a une masse moléculaire moyenne en nombre de 500 à 10 000.

13. Utilisation d'une composition, en tant que colle thermofusible autoadhésive, comprenant un élastomère thermoplastique contenant du fluor, qui est constitué par au moins un produit choisi dans le groupe constitué par un élastomère contenant du fluor, comprenant au moins un segment souple constitué par un terpolymère de fluorure de vinylidène/hexafluoropropylène/tétrafluoroéthylène ou de fluorure de vinylidène/chlorotrifluoréthylène/tétrafluoroéthylène et au moins un segment rigide constitué par un copolymère de tétrafluoroéthylène/éthylène ou de chlorotrifluoroéthylène/éthylène ou du fluorure de polyvinylidène, un élastomère contenant du fluor, comprenant au moins un segment souple constitué par un copolymère de tétrafluoroéthylène/propylène et au moins un segment rigide constitué par un copolymère de tétrafluoroéthylène/éthylène et un élastomère contenant du fluor, comprenant au moins un segment souple constitué par un copolymère caoutchouteux amorphe de tétrafluoroéthylène/éther de perfluoroalkyle et de vinyle et au moins un segment rigide comprenant un copolymère de tétrafluoroéthylène/éther de perfluoroalkyle et de vinyle dans lequel le taux d'éther de perfluoroalkyle et de vinyle est inférieur à celui contenu dans le segment souple, et un élastomère liquide contenant du fluor, dans laquelle le rapport pondéral dudit élastomère liquide contenant du fluor audit élastomère thermoplastique contenant du fluor est compris entre 60:40 et 99:1.

14. Utilisation d'une composition selon la revendication 13, dans laquelle le rapport pondéral dudit élastomère liquide contenant du fluor audit élastomère thermoplastique contenant du fluor est compris entre 72:28 et 99:1.

15. Utilisation d'une composition selon la revendication 13, dans laquelle le rapport pondéral dudit élastomère liquide contenant du fluor audit élastomère thermoplastique contenant du fluor est compris entre 72:28 et 95:5.

16. Utilisation selon la revendication 13, dans laquelle ledit élastomère liquide contenant du fluor est constitué par au moins un produit choisi dans le groupe comprenant un élastomère à base de fluorure de vinylidène/hexafluoropropylène, un élastomère à base de fluorure de vinylidène/hexafluoropropylène/tétrafluoroéthylène, un élastomère à base de tétrafluoroéthylène/propylène, un élastomère à base d'hexafluoropropylène/éthylène, un élastomère de fluorosilicone et un élastomère de phosphazène substitué par du fluor.

17. Utilisation selon la revendication 13, dans laquelle ledit élastomère liquide contenant du fluor a une masse moléculaire moyenne en nombre de 500 à 20 000.

18. Utilisation selon la revendication 17, dans laquelle ledit élastomère liquide contenant du fluor a une masse moléculaire moyenne en nombre de 500 à 10 000.
